# EUROPEAN PATENT APPLICATION

(11) **EP 2 154 393 A2**
(43) Date of publication of application: **17.02.2010**
(21) Application number: 09167422.6
(22) Date of filing: 06.08.2009
(51) Int. Cl.: F16F 15/04

(54) **Snubbing system for a suspended body**

(30) Priority: 15.08.2008 US 192716
(71) Applicant: Honeywell International Inc., Morristown, NJ 07962 (US)
(72) Inventor: Grossman, Owen, Morristown, NJ New Jersey 07962-2245 (US)
(74) Representative: Buckley, Guy Julian

(57) **Abstract**

The present invention generally relates to a snubbing or damping system for reducing a shock impact on an isolated body within a shock sensitive device, which m ay take the form of an inertial measurement unit (IMU). The shock sensitive device includes a housing with an inertial body suspended in an isolated manner within the housing and engaged with the snubbing system. By way of example, the inertial body may take the form of an inertial sensor assembly. Further, the snubbing system may take the form of a plastically deformable snubbing mechanism positioned between the housing and the inertial body along a line of action of the inertial body during an acceleration (e.g., shock) event.

## Description

### BACKGROUND OF THE INVENTION

Inertial measurement units (IMUs) are used in a variety of applications. An IMU is the main component of inertial guidance systems used in air and space vehicles, watercraft vehicles, guided missiles and a variety of gun and artillery applications. IMUs work by detecting the current rate of acceleration, as well as changes in rotational attributes, including pitch, roll and yaw using a combination of accelerometers and gyroscopes. By way of example, the data collected from these sensors allows a computer to track a vehicle's position using a method known as dead reckoning. The term IMU commonly refers to a housing having an inertial sensor assembly, which may include three accelerometers and three gyroscopes comprising the assembly. The accelerometers and gyroscopes may be placed such that they can measure inertial acceleration, also known as G-forces. The accelerometers, for example, may be placed such that their measuring axes are orthogonal to each other. The performance of at least some IMUs may be dependent on the vibration and shock isolation of its inertial sensor(s) within the units.

Honeywell®, one of the leading producers of IMUs, makes IMUs that serve the unique and demanding requirements of precision guided tactical and strategic guidance and navigation platforms of all types including: missiles, guided projectiles, ballistic interceptors, unmanned vehicles, targets, and torpedoes. By way of example, Honeywell® is also pioneering super-miniaturized inertial navigation systems using Micro ElectroMechanical Systems (MEMS) technology that enables revolutionary gun-hard performance. In such applications, the IMUs should be both small and robust. These systems may be referred to as gun hard applications and some systems must meet shock requirements having at least a 10,000 G-force set back.

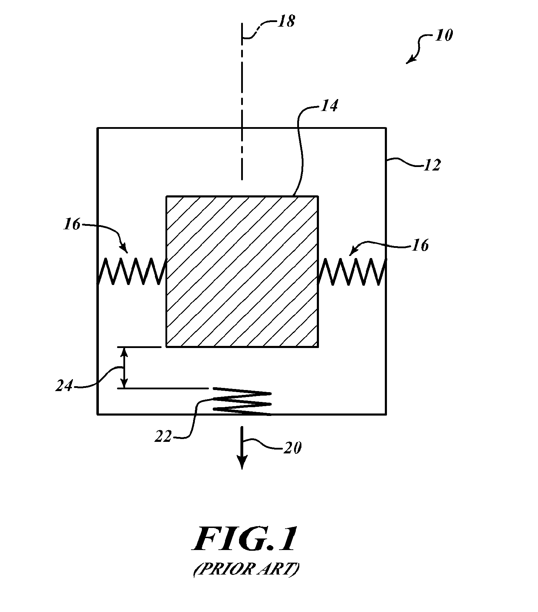

FIGURE 1 shows a prior art IMU 10 having a housing 12 with an inertial sensor assembly 14 suspended by a suspension system 16. During a shock event, the inertial sensor assembly 14 moves along a line of action 18 and moves generally in a first translational direction 20. A conventional elastic snubber 22 is seated in the housing 12 and includes a space or gap 24 between the conventional elastic snubber 22 and the inertial sensor assembly 14. Thus during the shock event, impact between the conventional elastic snubber 22 and the inertial sensor assembly 14 occurs after the gap 24 is closed, which in turn permits the inertial sensor assembly 14 to achieve a large amount of potential energy that is dissipated by the conventional elastic snubber 22 over a short time. One result of this configuration is the sensitive component within the inertial sensor assembly 14 may experience too large of a shock load and thus become damaged or degraded.

### SUMMARY OF THE INVENTION

The present invention generally relates to a snubbing or damping system for reducing a shock impact on an isolated body within a shock sensitive device, which may take the form of an inertial measurement unit (IMU). The shock sensitive device includes a housing with an inertial body suspended in an isolated manner within the housing and engaged with the snubbing system. By way of example, the inertial body may take the form of an inertial sensor assembly. Further, the snubbing system may take the form of a plastically deformable snubbing mechanism positioned between the housing and the inertial body along a line of action of the inertial body during an acceleration (e.g., shock) event.

### BRIEF DESCRIPTION OF THE DRAWINGS

Preferred and alternative embodiments of the present invention are described in detail below with reference to the following drawings:

FIGURE 1 is prior-art schematic view of an inertial measurement unit having an isolated body positioned within a housing and movable to close a gap between the isolated body and a conventional elastic snubber during a shock event;

FIGURE 2 is a schematic view of an inertial measurement unit having an inertial body suspended within an internal cavity formed by a housing and a deformable snubbing mechanism positioned to be in contact with the inertial body and with the housing according to an embodiment of the invention;

FIGURE 3 is a schematic view of the inertial measurement unit of FIGURE 2 showing a substantial amount of compression of the deformable snubbing mechanism during a shock event according to an embodiment of the invention; and

FIGURE 4 is a schematic view of the inertial measurement unit of FIGURE 2 showing an amount of permanent deformation of the deformable snubbing mechanism after the shock event according to an embodiment of the invention.

### DETAILED DESCRIPTION OF ONE EMBODIMENT

In one embodiment of the invention, an inertial snubbing system includes a housing having a housing wall defining an internal cavity and a body located within the internal cavity. In one embodiment, the body may take the form of an inertial sensor assembly for sensing a navigational direction. The system further includes a suspension system configured to isolatingly support the body within the cavity and with respect to the housing wall. In addition, a deformable snubbing mechanism is positioned between the body and the housing wall. The deformable snubbing mechanism includes a first end proximate the body and a second end proximate the housing wall such that the snubbing mechanism is arranged to be compressed substantially in a first direction during cceleration of the body in the first direction.

In another embodiment of the invention, an inertial measurement unit includes sensing means for sensing a navigational direction; support means for isolating the sensing means within a cavity formed by a housing; and snubbing means for absorbing an amount of potential energy from the sensing means, wherein the snubbing means remains permanently deformed after being compressed by a predetermined amount due to movement of the sensing means, wherein the snubbing means includes a first end in contact with the inertial sensor assembly and a second end in contact with the housing before absorbing the amount of potential energy.

The inertial sensor assembly has a certain amount of *potential* energy because of the distance between it and the conventional snubber and because of the acceleration applied to the IMU. This is analogous to an object held some distance above the ground in the presence of gravity. The inertial sensor assembly gains kinetic energy and loses potential energy as it starts to move toward the conventional snubber. The snubber has to absorb the inertial sensor assembly's kinetic energy plus any remaining potential energy before it comes to rest against the snubber.

However, when the inertial sensor assembly is in contact with the deformable snubbing mechanism of the present invention as it begins to accelerate then the inertial sensor assembly gains little or even negligible kinetic energy. Most of the *potential* energy goes directly to the deforming the deformable snubbing mechanism.

In yet another embodiment of the invention, a method for decelerating an inertial sensor assembly within a housing of an inertial measurement unit includes the steps of (1) isolating the inertial sensor assembly within a cavity formed by the housing; (2) positioning a deformable snubbing mechanism with a first end in contact with the body and a second end in contact with the housing; (3) accelerating the inertial sensor assembly in a first direction; and (4) during acceleration in the first direction, compressing the deformable snubbing mechanism with the potential energy of the inertial sensor assembly, wherein the deformable snubbing mechanism remains permanently deformed after a predetermined amount of compression.

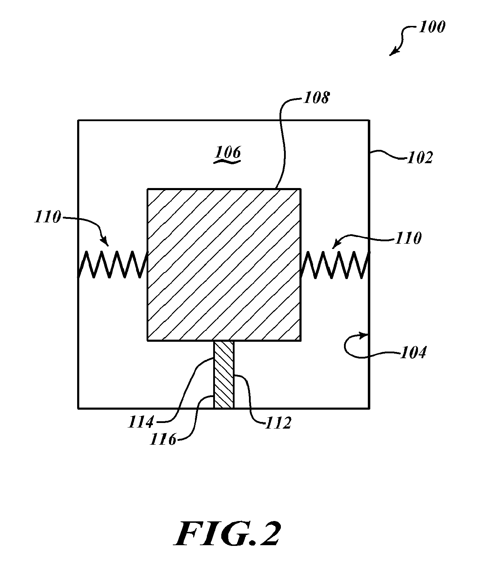

FIGURE 2 schematically shows an inertial measurement unit (IMU) 100 having a housing 102 with a housing wall or walls 104 defining a cavity 106. The housing 102 may include more than one wall, but for purposes of clarity herein the housing 102 will be referred to as having one wall 104. An inertial body 108, which may take the form of an inertial sensor assembly 108 (otherwise referred to as an inertial cluster) is coupled to a suspension system 110 in a manner such that the inertial body 108 is supported within the cavity 106 and isolated with respect to the housing wall 104, meaning the inertial body 108 is not in direct contact with the wall 104 of the housing 102. The housing 102, the inertial body 108, and the suspension system 110 may be conventional devices comprising some of the main components of an IMU 100. In one embodiment of the invention, a deformable snubbing mechanism or snubber 112 is positioned between the inertial body 108 and the housing wall 104. One purpose of the deformable snubbing mechanism 112 is to substantially reduce an impact or shock load sustained by the inertial body 108 during a shock event.

In one embodiment, the deformable snubbing mechanism 112 includes a first end portion 114 in contact with the inertial body 108 and a second end portion 116 in contact with the housing wall 104. Alternatively, the deformable snubbing mechanism 112 may include a small gap or space between the first end portion 114 and the inertial body 108 or between the second end portion 116 and the housing wall 104. The configuration of the snubbing mechanism 112 may be selected to have a desired cross-sectional profile and be made from a desired material such that the snubbing mechanism 112 substantially absorbs the work (e.g., potential energy) of the inertial body 108 during an acceleration event of the inertial body 108. By way of example, the deformable snubbing mechanism 112 may be made from a polymeric material, a metallic material, a fiber-reinforced composite material or some combination of the same. The deformable snubbing mechanism 112 operates such that it permanently deforms under a predetermined load or greater load from the inertial body 108.

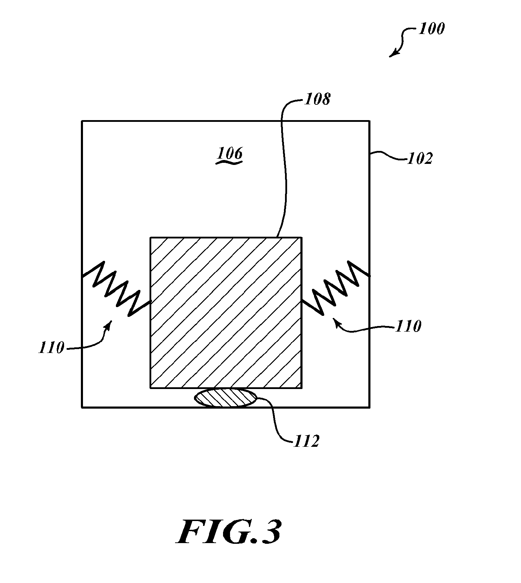

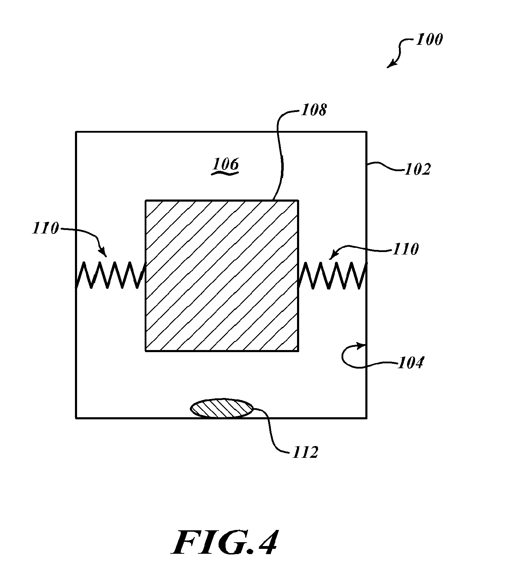

FIGURE 3 shows the deformable snubbing mechanism 112 in a compressed state and with the inertial body 108 still in contact with the deformable snubbing mechanism 112. During operation or more specifically during the time when the IMU 100 undergoes the shock event, the inertial body 108 begins to move in a direction in which it compresses the deformable snubbing mechanism 112. Because the deformable snubbing mechanism 112 was already in contact with the inertial body 108 and with the housing 102, the potential energy of the inertial body 108 is immediately (or very close to immediately) transferred to the deformable snubbing mechanism 112 to cause the compression (e.g., deformation) thereof. As noted above, the deformable snubbing mechanism112 is sized and otherwise configured to absorb a desired amount of potential energy from the inertial body 108 such that any gyroscopes and/or accelerometers located within the inertial body 108 remain undamaged for the duration of the shock event. FIGURE 4 shows the deformable snubbing mechanism 112 in the compressed state after the shock event and further shows the deformable snubbing mechanism 112 taking on a permanent set, or in other words being permanently deformed after the shock event.

While one embodiment of the invention has been illustrated and described, as noted above, many changes can be made without departing from the spirit and scope of the invention. Accordingly, the scope of the invention is not limited by the disclosure of one embodiment. Instead, the invention should be determined entirely by reference to the claims that follow.

The embodiments of the invention in which an exclusive property or privilege is claimed are defined as follows:

## Claims

1. An inertial snubbing system (100) comprising:
a housing (102) having a housing wall (104) defining an internal cavity (106);
a body (108) located within the internal cavity (106);
a suspension system (110) configured to isolatingly support the body (108) within the cavity (106) and with respect to the housing wall (104); and
a deformable snubbing mechanism (112) positioned between the body (108) and the housing wall (104), the deformable snubbing mechanism (112) having a first end (114) proximate the body (108) and a second end (116) proximate the housing wall (104), the snubbing mechanism (112) arranged to be compressed substantially in a first direction during acceleration of the body (108) in the first direction.

2. The inertial snubbing system (100) of Claim 1, wherein the suspension system (110) includes biasing members having first ends connected to the body (108) and second ends connected to respective regions of the housing wall (104).

3. The inertial snubbing system (100) of Claim 1, wherein the body (108) is an inertial sensor assembly.

4. The inertial snubbing system (100) of Claim 1, wherein the body (108) remains in contact with the deformable snubbing mechanism (112) when moving in the first direction.

5. The inertial snubbing system (100) of Claim 1, wherein the deformable snubbing mechanism (112) is configured to absorb a predetermined amount of potential energy from the body (108) during acceleration of the body (108) in the first direction.

6. The inertial snubbing system (100) of Claim 1, wherein the deformable snubbing mechanism (112) is configured to plastically deform such that a space is present between the body (108) and the deformed snubbing mechanism (112) after an acceleration event of the body (108).

7. A method for decelerating an inertial sensor assembly (108) within a housing (102) of an inertial measurement unit, the method comprising:
isolating the inertial sensor assembly (108) within a cavity (106) formed by the housing (102);
positioning a deformable snubbing mechanism (112) with a first end (114) in contact with the body (108) and a second end (116) in contact with the housing (102);
accelerating the inertial sensor assembly (108) in a first direction; and during acceleration in the first direction, compressing the deformable snubbing mechanism (112) with the potential energy of the inertial sensor assembly (108), wherein the deformable snubbing mechanism (112) remains permanently deformed after a predetermined amount of compression.

8. The method of Claim 14, further comprising:
isolating the inertial sensor assembly (108) within the cavity (106) includes supporting the inertial sensor assembly (108) with a vibration isolator assembly (110).

9. The method of Claim 14, wherein positioning the deformable snubbing mechanism (112) with the first end (114) in contact with the body (108) and the second end (116) in contact with the housing (102) includes positioning the deformable snubbing mechanism (112) such that a predetermined inertial load of the inertial sensor assembly (108) causes a permanent set in the snubbing mechanism (112).

10. The method of Claim 14, wherein accelerating the inertial sensor assembly (108) in the first direction includes moving the housing (102) in an opposite direction from the first direction.
